(19) Europäisches Patentamt / European Patent Office / Office européen des brevets

(11) **EP 2 761 588 B1**

(12) **FASCICULE DE BREVET EUROPEEN**

(45) Date de publication et mention de la délivrance du brevet:
**15.11.2017  Bulletin 2017/46**

(21) Numéro de dépôt: **12769383.6**

(22) Date de dépôt: **27.09.2012**

(51) Int Cl.:
**G06T 7/00** *(2017.01)*    **G06T 7/33** *(2017.01)*

(86) Numéro de dépôt international:
**PCT/EP2012/069153**

(87) Numéro de publication internationale:
**WO 2013/045594 (04.04.2013 Gazette 2013/14)**

(54) **METHODE D'ANALYSE RAPIDE DES ELEMENTS EN RELIEF FIGURANT SUR LA SURFACE INTERNE D'UN PNEUMATIQUE**

SCHNELLES ANALYSEVERFAHREN FÜR RELIEF-ELEMENTE AUF DER INNENSEITE VON AUTOREIFEN

FAST ANALYSIS METHOD FOR RELIEF PARTS SHOWING ON THE INTERIOR SURFACE OF A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2011  FR 1158804**

(43) Date de publication de la demande:
**06.08.2014  Bulletin 2014/32**

(73) Titulaire: **Compagnie Générale des Etablissements Michelin
63000 Clermont-Ferrand (FR)**

(72) Inventeurs:
- **NOYEL, Guillaume
  F-63040 Clermont-Ferrant Cedex 9 (FR)**
- **JEULIN, Dominique
  F-77305 Fontainebleau (FR)**
- **PARRA-DENIS, Estelle
  F-77305 Fontainebleau (FR)**
- **BILODEAU, Michel
  F-77305 Fontainebleau (FR)**

(74) Mandataire: **Roussy, Delphine
Manufacture Française des
Pneumatiques Michelin
23, place des Carmes-Déchaux
DGD/PI - F35 - Ladoux
63040 Clermont-Ferrand Cedex 9 (FR)**

(56) Documents cités:
**EP-A1- 2 077 442    EP-A1- 2 295 930
WO-A1-02/48648    DE-C1- 19 849 793**

- **DENGLER J ET AL: "SEGMENTATION OF MICROCALCIFICATIONS IN MAMMOGRAMS", IEEE TRANSACTIONS ON MEDICAL IMAGING, IEEE SERVICE CENTER, PISCATAWAY, NJ, US, vol. 12, no. 4, 1 décembre 1993 (1993-12-01), pages 634-642, XP000447010, ISSN: 0278-0062, DOI: 10.1109/42.251111**
- **FRANCIS D ET AL: "TOPICAL REVIEW; Shearography technology and applications: a review", MEASUREMENT SCIENCE AND TECHNOLOGY, IOP, BRISTOL, GB, vol. 21, no. 10, 1 octobre 2010 (2010-10-01), page 102001, XP020181683, ISSN: 0957-0233**

**Description**

L'invention concerne le domaine de la fabrication des pneumatiques, et s'inscrit de manière plus générale dans le cadre des opérations de contrôle de l'aspect extérieur intérieur des pneumatiques en cours ou en fin du processus de fabrication, dans le but d'en déterminer la conformité par rapport à des références de contrôle.

Les moyens industriels de contrôle automatiques des pneumatiques développés par les manufacturiers et destinés notamment à assister les opérateurs chargés du contrôle visuel, font largement appel à des techniques de traitement d'image.

Une des étapes de ce processus consiste, de manière connue, à acquérir l'image en trois dimensions de la surface du pneumatique, à l'aide par exemple, de moyens basés sur le principe de la triangulation optique, mettant en oeuvre un capteur 2D couplé à une source d'éclairage de type laser.

L'image topographique de la surface du pneumatique est, en règle générale, une image bidimensionnelle dite à niveau de gris dans laquelle, à tout point, i.e. à tout pixel de l'image, est associé une valeur appelée niveau de gris, qui est proportionnelle à l'altitude de ce point par rapport à la surface. Cette valeur de niveau de gris peut utilement être codée sur 8, ou 16 bits, voire 32 bits pour une meilleure dynamique. Pour un codage sur 8 bits, la valeur 255 (blanc) correspond à l'altitude la plus haute, et la valeur 0 (noir), correspond à l'altitude la plus basse. De cette manière, l'assimilation de l'image en niveau de gris figurant les reliefs à une image en noir et blanc, peut alors se confondre au traitement d'une image à niveau de gris.

La poursuite du processus d'analyse de l'image obtenue consiste, plus particulièrement dans le cas de la surface interne du pneumatique, à détecter les éléments en relief de la surface à inspecter, et à distinguer les éléments anormaux des éléments tels que les stries ou les motifs en relief destinés à assurer le drainage de l'air pendant la cuisson du pneumatique. Ces éléments en relief dépassent en règle générale de quelques dixièmes de millimètre la surface moyenne de la partie interne du pneumatique.

Des méthodes d'analyse peuvent faire appel aux traitements d'image tels que l'analyse morphologique, et sont décrites, à titre d'exemple, dans la demande de brevet FR 11/54346 ou encore dans la demande WO/EP11/053284, non publiées à la date de dépôt de la présente demande. Ces méthodes mettent en oeuvre des procédures d'analyses de l'image utilisant des filtres morphologiques, tels que des top-hat, et s'appliquent particulièrement bien à l'analyse de l'image de la surface interne du pneumatique. Le document DE 198 49 793, ou encore le document WO 02/48648, décrivent des méthodes de traitement de l'image d'un flanc de pneumatique permettant de distinguer la courbure du flanc des variations liées aux éléments graphiques ou aux anomalies de surface par l'utilisation de filtres fréquentiels.

La pertinence de ces méthodes se paie toutefois au prix de temps de calculs importants qu'il est toujours intéressant de réduire.

La méthode d'analyse rapide selon l'invention a pour objet d'apporter une solution alternative à ce problème qui soit moins consommatrice en temps de calcul. Cette méthode a pour objet d'identifier rapidement les zones susceptibles de contenir une anomalie. Une fois la zone identifiée il est alors possible de réexaminer localement la surface en question à l'aide des outils cités ci-dessus pour approfondir l'analyse.

La méthode d'analyse rapide des éléments en relief comprend les étapes au cours desquelles :

A- on capture l'image tridimensionnelle de ladite surface en affectant à chaque pixel de l'image une valeur de niveau de gris proportionnelle à l'élévation topographique de ce point, pour obtenir une image de départ,
B- on transforme l'image de la surface capturée dans un repère orthogonal (OXY) dans lequel l'axe des abscisses (OX) représente la direction circonférentielle, et l'axe des ordonnées (OY) représente la direction radiale,
C- on affecte à chaque pixel de la surface, une valeur de gradient d'altitude en comparant son élévation avec l'élévation d'un nombre discret et réduit de points disposés sur une droite passant par le pixel considéré et orientée dans la direction circonférentielle,

Préférentiellement, à l'issue de l'étape C, on transforme l'image en affectant une valeur de gradient égale à zéro aux pixels dont le gradient d'élévation a une valeur absolue inférieure à un seuil donné.

Préférentiellement, le nombre de points, en sus du point auquel on cherche à attribuer ladite valeur de gradient, est compris entre 1 et 4.

Lorsque la surface intérieure comprend des stries, l'appréciation du gradient d'altitude au cours de l'étape C peut être réalisée à l'aide d'un seul point distant du pixel considéré d'une valeur donnée. Cette distance peut utilement être sensiblement égale à l'écartement circonférentiel entre deux stries.

Pour plus de précision, l'appréciation du gradient d'altitude au cours de l'étape C peut être réalisée à l'aide de quatre points positionnés de part et d'autre dudit pixel,

Lorsque la surface intérieure comprend des stries, on positionnera avantageusement les points en amont et en aval du pixel considéré respectivement à une distance sensiblement comprise entre une et dix fois la largeur circonférentielle d'une strie, et entre une et cinq fois la largeur circonférentielle d'une strie.

A l'issue de l'étape C, pour extraire rapidement l'information contenue dans l'image transformée selon la méthode ci-dessus, on peut utilement déterminer un profil circonférentiel réduit de l'image en affectant à un ensemble de points situés sur une même abscisse circonférentielle, et compris entre deux valeurs d'ordonnées radiales ($y_1,y_2$), une valeur représentative de leur variation d'élévation.

Selon une première alternative, au cours de cette étape, on détermine le profil circonférentiel réduit, en effectuant la somme ou la moyenne des valeurs absolues de gradient affectées à chacun des pixels ayant la même position radiale.

Selon une seconde alternative, on détermine le profil circonférentiel réduit en dénombrant le nombre de pixels ayant la même position radiale et ayant une valeur non nulle.

Pour extraire l'information utile et déterminer les zones présentant potentiellement une anomalie, il est alors possible de démoduler le signal représentant le profil circonférentiel réduit en soustrayant un filtre passe bas audit profil circonférentiel réduit, de manière à ne faire apparaître que les éléments dont l'amplitude est supérieure audit seuil.

Lorsque la surface intérieure comprend des stries, il sera également possible de démoduler le signal représentant le profil circonférentiel en éliminant les éléments périodiques.

Pour ce faire on soustrait au profil circonférentiel réduit l'infimum dudit profil avec son décalé de la valeur de la période d'apparition circonférentielle des stries.

La description qui suit s'appuie sur les figures 1 à 7 dans lesquelles :

- la figure 1 est une image en niveau de gris du relief de la surface intérieure d'un pneumatique,
- la figure 2 représente un opérateur multipoint comprenant 5 points,
- la figure 3 représente le profil des variations de l'élévation après traitement à l'aide d'un multipoint comprenant 5 points,
- la figure 4 représente l'image de la figure 3 après seuillage,
- la figure 5 représente le profil circonférentiel de l'image de la figure 4 après comptage des pixels non nuls,
- la figure 6 représente le profil circonférentiel calculé sur la moyenne des valeurs de gris du tiers inférieur de l'image de la figure 3,
- la figure 7 représente l'image de la figure 6 démodulée à l'aide d'un filtre passe bas,
- la figure 8 représente l'image de la figure 6 démodulée par extraction de la valeur périodique des stries.

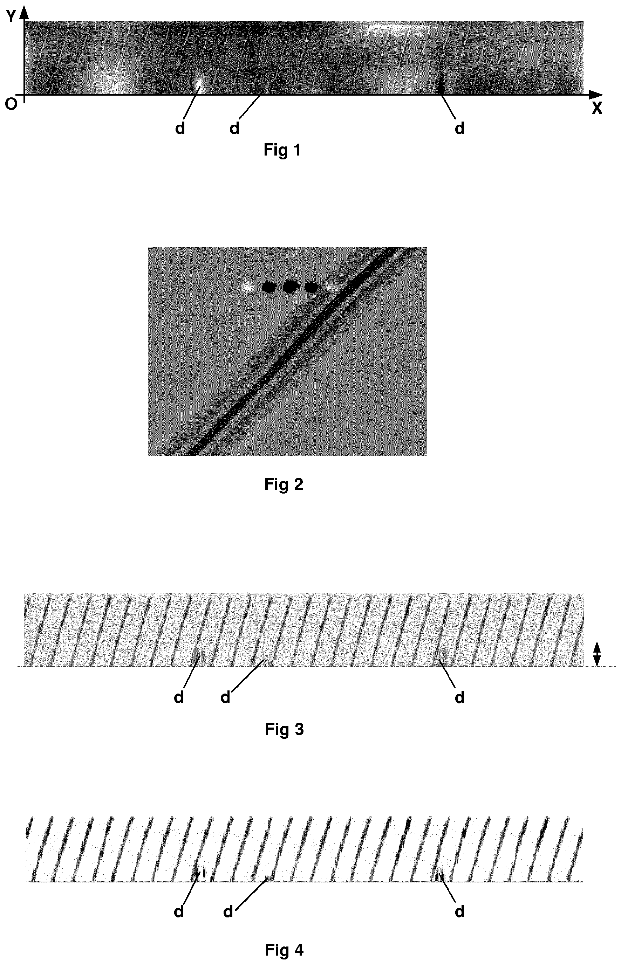

L'image de la figure 1, $g(p)$, est obtenue à l'aide de moyens d'acquisition basés sur le principe de la triangulation optique, comprenant un capteur 2D couplé à une source d'éclairage de type laser. A tout pixel $p(i,j)$ de l'image, est associée une valeur de niveau de gris représentant l'élévation de ce point par rapport à la surface interne du pneumatique. Ces élévations locales sont dues principalement à la présence de stries destinées à écouler l'air occlus entre la membrane de cuisson et la surface interne du pneumatique pendant la vulcanisation de l'enveloppe. Elles peuvent également provenir de la présence d'anomalies, et présenter dans ce cas une élévation positive, comme une élévation négative. Ces anomalies sont repérées dans les figures 1 à 8 par l'indice d ou sont entourées par une ellipse.

En raison de la forme circulaire du pneumatique, le repérage des pixels de l'image originale est obtenue en règle générale en coordonnées cylindriques par les moyens d'acquisition. En raison de la commodité des calculs, et bien que cela ne soit pas absolument nécessaire, il s'avère toutefois utile de transformer cette image dans un repère orthonormé OXY pour obtenir une image déroulée $g(p(x,y))$ de la surface interne du pneumatique dans laquelle pour chaque pixel, les coordonnées circonférentielles sont portées sur l'axe OX, et les coordonnées radiales sont portées sur l'axe OY.

Pour la détection des variations d'altitude destinée à extraire les éléments susceptibles de représenter des anomalies, on fait couramment appel aux opérateurs morphologiques comprenant des séries combinées d'opération d'ouverture et de fermeture à l'aide d'éléments structurants correctement choisis. Ces méthodes nécessitent le calcul d'infimum ou de supremum sur des éléments structurants de taille importante comprenant un grand nombre de points. Les résultats obtenus permettent de localiser avec une bonne précision les objets recherchés.

Il s'avère néanmoins utile d'alléger les temps de calcul et de ne réserver l'utilisation de ces méthodes qu'aux seules zones dans lesquelles on suspecte la présence d'une valeur anormale.

La méthode d'analyse rapide a pour objet de réaliser des calculs similaires, à l'aide d'un nombre beaucoup plus réduit de points, judicieusement placés les uns par rapport aux autres, en considérant que la surface intérieure d'un pneumatique ne présente pas de variations d'altitude trop irrégulières dans la direction circonférentielle.

Les algorithmes qui ont été testés avec succès sont basés sur l'utilisation d'un nombre réduits de points et consistent à affecter à chaque pixel une valeur représentative $f(p)$ de la variation d'altitude en ce point. Les meilleurs résultats ont été obtenus à l'aide d'algorithmes à 2 points, à 4 points ou à 5 points, et comprenant le pixel auquel on cherche à attribuer la valeur en question. Ces points sont alignés entre eux dans le sens circonférentiel (OX).

Pour un algorithme à deux points, comprenant le point la valeur représentative est donnée par :

$$f(p_{x,y}) = \left| g(x,y) - g(x+a,y) \right|$$

Lorsque la surface intérieure comprend des stries, la valeur a est sensiblement égale à la distance circonférentielle entre deux stries de manière à rendre nul tout ce qui est périodique en a et non nul ce qui ne l'est pas.

Pour un algorithme à quatre points la valeur représentative est donnée par :

$$f(p_{x,y}) = \left| g(x,y) - g(x+b,y) \right| - \left| g(x+a,y) - g(x+a+b,y) \right|$$

Lorsque la surface intérieure comprend des stries, la valeur de a peut préférentiellement être comprise entre une et dix fois la largeur circonférentielle de la strie, et la valeur de b entre une et cinq fois la largeur circonférentielle de la strie, de manière à faire ressortir les éléments en relief de pente moyenne. A titre indicatif, pour une dimension tourisme de 17", des valeurs de a et de b respectivement égales à quatre fois et à deux fois la largeur des stries ont données de bons résultats.

Pour un algorithme à cinq points, tel que représenté à la figure 2, la valeur représentative est donnée par :

$$f(p_{x,y}) = \alpha \left( \left| g(x-a,y) - g(x-b,y) \right| + \left| g(x+a,y) - g(x+b,y) \right| \right)$$
$$- \beta \left( \left| g(x,y) - g(x-b,y) \right| - \left| g(x,y) - g(x+b,y) \right| \right)$$

Lorsque la surface intérieure comprend des stries, la valeur de a est sensiblement égale à deux fois la largeur circonférentielle de la strie, et la valeur b est sensiblement égale à la largeur circonférentielle de la strie, de manière à faire ressortir les stries et des éléments en relief de pente plus forte.

Pour améliorer les contrastes entre les gradients de forte pente tels que les bords, ou de faible pente tels que les parties sommet, on peut modifier les poids respectifs des deux zones à l'aide de coefficients de pondération $\alpha$ et $\beta$, avec $\alpha + \beta = 1$.

L'usage d'un algorithme à cinq points permet également de localiser l'abscisse x du bord d'une perturbation, en considérant que la forme de la perturbation comprend une entrée et une sortie correspondant à un gradient élevé du profil circonférentiel. Cette information est accessible à partir des écarts |g(x-a,y)-g(x-b,y)| et |g(x+a,y)-g(x+b,y)|. Le voisinage du sommet de la perturbation correspond à un gradient plus faible, accessible à partir des écarts |g(x,y)-g(x-b,y)| et |g(x,y)-g(x+b,y)|.

Le sommet de la perturbation correspond à la valeur de x qui maximise l'expression :

$$f(p_{x,y}) = \left| g(x-a,y) - g(x-b,y) \right| + \left| g(x+a,y) - g(x+b,y) \right|$$
$$- \left| g(x,y) - g(x-b,y) \right| - \left| g(x,y) - g(x+b,y) \right|$$

La figure 3 représente l'image de la surface après transformation à l'aide d'un opérateur multipoints comprenant cinq points.

Une fois l'ensemble de l'image transformée à l'aide de l'opérateur multipoint, et toujours dans l'esprit de diminuer les temps de calcul, il est possible à ce stade de transformer l'image en une image réduite.

Pour améliorer la sensibilité de la méthode, il est judicieux, avant de réduire l'image, de ramener à une valeur nulle les points pour lesquels le gradient d'altitude présente une valeur absolue inférieure à un seuil donné. La figure 4 représente l'image de la figure 3 après cette opération de seuillage.

La réduction de l'image consiste à ramener l'image transformée de la surface qui est une image en deux dimensions, figurée par un tableau bidimensionnel de valeurs représentant les variations d"altitude $f(x)$ en chacun des points de l'image, à une représentation en une dimension figurant une courbe ou un signal du profil circonférentiel réduit $r(x)$ représentatif de la signature des variations de relief de la surface.

Ce processus consiste donc à affecter à un ensemble de pixels ayant une même position radiale (y=constante), une valeur représentative de la variation d'altitude de ces pixels.

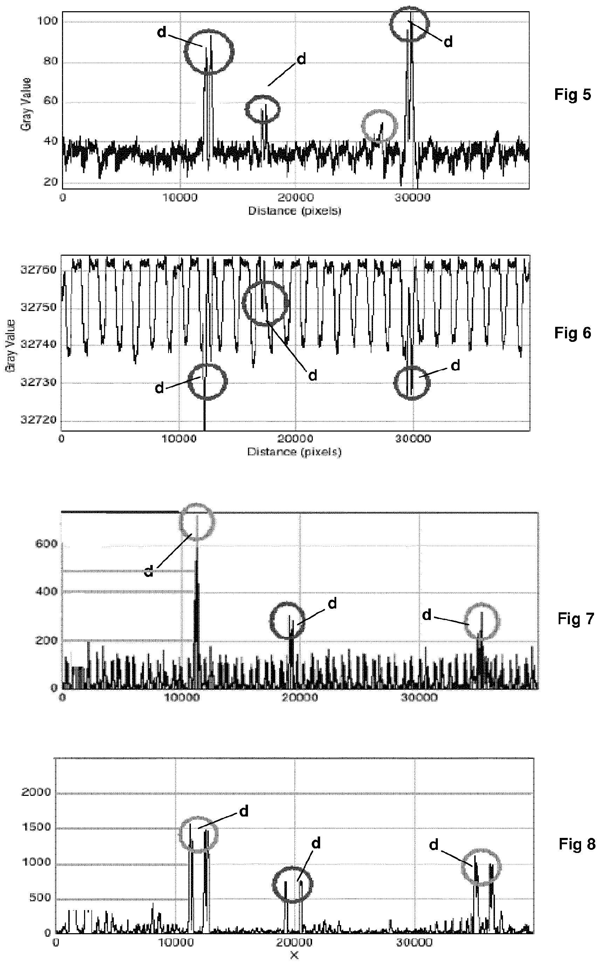

Une première façon de procéder consiste tout simplement à compter le nombre de pixels ayant une valeur non nulle, et placés sur la même abscisse circonférentielle. La figure 5 représente une réduction de l'image de la figure 4 selon ce premier mode de réduction.

De manière alternative on pourra également effectuer la somme ou la moyenne des valeurs absolues de gradient de chacun des pixels :

$$r(x) = \sum_{y=y_1}^{y=y_2} \left| f\left(p(x,y)\right) \right|$$

La figure 6 représente une réduction de l'image de la figure 4 selon ce second mode de réduction.

Les anomalies se repèrent facilement sur ces deux images. Toutefois, on constate sur la figure 5 qu'une anomalie supplémentaire s'est glissée parmi les trois qui avaient été repérées précédemment sur la surface du pneumatique. Cette anomalie n'apparaît pas en revanche sur le graphe de la figure 6. Ce qui peut être considéré ici comme une détection à tort résulte de la rusticité du mode d'analyse employé. Toutefois, lorsque l'on envisage d'utiliser la méthode comme une première approche en vue de lancer des analyses plus poussées sur les zones suspectées de contenir une anomalie, il est préférable de privilégier les détections à tort plutôt que les détections manquées.

On observe aussi que ces deux représentations réduites mettent en évidence des variations périodiques qui sont dues aux stries présentes sur la surface intérieure du pneumatique. Ces variations périodiques s'additionnent aux perturbations, et surviennent dans les environs d'une anomalie. En considérant que, dans le cas d'un pneumatique, ces anomalies n'ont pas de caractère périodique, il peut s'avérer avantageux d'extraire les éléments périodiques de la courbe représentant le profil circonférentiel réduit de l'image de l'intérieur du pneumatique.

Une première méthode peut prévoir de soustraire le signal transformé par un filtre passe bas tel que représenté à la figure 7 dans laquelle les abscisses circonférentielles des anomalies sont faciles à localiser. En modifiant le seuil de ce filtre on peut aisément régler la sensibilité de la détection, et privilégier si on le souhaite, le nombre de détection à tort.

Si la périodicité s des stries est relativement constante et connue, on peut aussi démoduler le signal du profil circonférentiel réduit en soustrayant aux valeurs dudit profil l'infimum du profil avec son décalé :

$$m(x) = r(x) - \wedge(r(x), r(x-s))$$

Le résultat est illustré à la figure 8.

Les mêmes anomalies ressortent aux mêmes valeurs d'abscisses circonférentielles.

L'intérêt de la méthode exposée ci-dessus est de permettre de réaliser une première analyse rapide destinée à mettre en évidence les zones présentant une anomalie potentielle.

Une fois ces zones repérées, il est alors possible de lancer des analyses plus poussées à l'aide des algorithmes de calcul utilisant les outils de l'analyse morphologique tels que ceux décrits dans les demandes de brevet FR 11/54346 ou WO/EP11/053284 citées précédemment.

## Revendications

1.  Procédé d'analyse rapide des éléments en relief figurant sur la surface intérieure d'un pneumatique, ladite, comprenant les étapes au cours desquelles :

    A- on capture l'image tridimensionnelle de ladite surface en affectant à chaque pixel ($p(i,j)$) de l'image une valeur de niveau de gris ($g(p)$) proportionnelle à l'élévation topographique de ce point, pour obtenir une image de départ,
    B- on transforme l'image de la surface capturée dans un repère orthogonal (OXY) dans lequel l'axe des abscisses (OX) représente la direction circonférentielle, et l'axe des ordonnées (OY) représente la direction radiale,
    C- on affecte à chaque pixel ($p(x,y)$) de la surface, une valeur de gradient d'altitude ($f(p)$), en comparant son élévation avec l'élévation d'un nombre de points, en sus du point auquel on cherche à attribuer ladite valeur de gradient, compris entre 1 et 4, et disposés sur une droite passant par le pixel considéré (p) et orientée dans la direction circonférentielle,

    le procédé étant tel que au cours de l'étape C, l'appréciation du gradient d'altitude $|f(p_{x,y})|=|g(x,y)-g(x+a,y)|$ est réalisée à l'aide d'un seul point distant du pixel considéré ($p(x,y)$) d'une valeur donnée (a), et que à l'issue de l'étape C, on transforme l'image en affectant une valeur de gradient égale à zéro aux pixels dont que le gradient d'élévation ($f(p)$) a une valeur absolue inférieure à un seuil donné. , .

2.  Procédé d'analyse rapide selon la revendication 1, dans laquelle la surface intérieure comprend des stries, et dans laquelle le point est distant du pixel considéré d'une longueur (a) correspondant sensiblement à l'écartement circonférentiel entre deux stries.

3. Procédé d'analyse rapide selon la revendication 2, dans laquelle, au cours de l'étape C, l'appréciation du gradient d'altitude $(f(p_{x,y})=|g(x,y)-g(x+b,y)|$   $-|g(x+a,y)-g(x+a+b,y)|$,   $f(p_{x,y})=\alpha(|g(x-a,y)-g(x-b,y)|$   $+|g(x+a,y)-g(x+b,y)|)-\beta(|g(x,y)-g(x-b,y)|-|g(x,y)-g(x+b,y)|)))$ est réalisée à l'aide de quatre points positionnés de part et d'autre du pixel considéré.

4. Procédé d'analyse rapide selon la revendication 3, dans laquelle la surface intérieure comprend des stries, et dans laquelle les points en amont et en aval du pixel considéré sont respectivement distants dudit pixel d'une longueur sensiblement comprise entre une et dix fois la largeur circonférentielle d'une strie (a) et entre une et cinq fois la largeur circonférentielle d'une strie (b).

5. Procédé d'analyse rapide selon l'une des revendications 1 à 4, dans laquelle, à l'issue de l'étape C on détermine le profil circonférentiel réduit de l'image en affectant à un ensemble de points situés sur une même abscisse circonférentielle, et compris entre deux valeurs d'ordonnées radiales $(y_1, y_2)$, une valeur représentative $(r(x))$ de leur variation d'élévation.

6. Procédé d'analyse rapide selon la revendication 5, dans laquelle on détermine le profil circonférentiel réduit, en effectuant la somme ou la moyenne des valeurs absolues de gradient affectées à chacun des pixels ayant la même position radiale

$$( r(x) = \sum_{y=y_1}^{y=y_2} f( p(x,y) ).$$

7. Procédé d'analyse rapide selon la revendication 5 dans laquelle, on détermine le profil circonférentiel réduit $(r(x))$ en dénombrant le nombre de pixels situés sur une même abscisse circonférentielle ayant une valeur non nulle.

8. Procédé d'analyse rapide selon l'une des revendications 5 à 7, dans laquelle on démodule le signal $(r(x))$ représentant le profil circonférentiel réduit.

9. Procédé d'analyse rapide selon la revendication 8, dans laquelle on démodule le signal en soustrayant un filtre passe bas audit profil circonférentiel réduit $(r(x))$, de manière à ne faire apparaître que les éléments dont l'amplitude est supérieure audit seuil.

10. Procédé d'analyse rapide selon la revendication 8, dans laquelle la surface intérieure comprend des stries, et dans laquelle on démodule le signal représentant le profil circonférentiel réduit en éliminant les éléments périodiques.

11. Procédé d'analyse rapide selon la revendication 10, dans laquelle on soustrait au profil circonférentiel réduit l'infimum dudit profil avec son décalé de la valeur de la période (s) d'apparition circonférentielle des stries $(m(x)=r(x)-\wedge(r(x),r(x-s)))$.

**Patentansprüche**

1. Schnellanalyseverfahren der Reliefelemente, die auf der Innenfläche eines Luftreifens erscheinen, das die Schritte enthält, während denen:

A- das dreidimensionale Bild der Fläche erfasst wird, indem jedem Pixel $(p(i,j))$ des Bilds ein Graupegelwert $(g(p))$ proportional zur topographischen Erhöhung dieses Punkts zugeordnet wird, um ein Ausgangsbild zu erhalten,
B- das erfasste Bild der Fläche in ein orthogonales Bezugssystem (OXY) umgewandelt wird, in dem die Abszissenachse (OX) die Umfangsrichtung und die Ordinatenachse (OY) die radiale Richtung darstellt,
C- jedem Pixel $(p(x,y))$ der Fläche ein Höhengradientenwert $(f(p))$ zugeordnet wird, indem seine Erhöhung mit der Erhöhung einer Anzahl von Punkten zusätzlich zu dem Punkt verglichen wird, dem man diesen Gradientenwert zuweisen möchte, zwischen 1 und 4, und auf einer Geraden angeordnet, die durch das betrachtete Pixel (p) verläuft und in Umfangsrichtung ausgerichtet ist,

wobei das Verfahren so ist, dass während des Schritts C die Beurteilung des Höhengradienten $(f(p_{x,y})=|g(x,y)-g(x+a,y)|)$ mit Hilfe eines einzigen Punkts fern vom betrachteten Pixel ($p(x,y)$) eines gegebenen Werts (a) durchgeführt wird, und dass nach dem Schritt C das Bild umgewandelt wird, indem ein Gradientenwert gleich Null den Pixeln zugeordnet wird, deren Erhöhungsgradient ($f(p)$) einen Absolutwert niedriger als eine gegebene Schwelle hat.

2. Schnellanalyseverfahren nach Anspruch 1, wobei die Innenfläche Riefen enthält, und wobei der Punkt vom betrachteten Pixel um eine Länge (a) entfernt ist, die im Wesentlichen dem Umfangsabstand zwischen zwei Riefen entspricht.

3. Schnellanalyseverfahren nach Anspruch 2, wobei während des Schritts C die Beurteilung des Höhengradienten $(f(p_{x,y})=|g(x,y)-g(x+b,y)|-|g(x+a,y)-g(x+a+b,y)|, f(p_{x,y})=\propto(|g(x-a,y)-g(x-b,y)|+|g(x+a,y)-g(x+b,y)|)-\beta(|g(x,y)-g(x-b,y)|-|g(x,y)-g(x+b,y)|)))$ mit Hilfe von vier Punkten durchgeführt wird, die zu beiden Seiten des betrachteten Pixels positioniert sind.

4. Schnellanalyseverfahren nach Anspruch 3, wobei die Innenfläche Riefen enthält, und wobei die Punkte stromaufwärts und stromabwärts des betrachteten Pixels je vom Pixel um eine Länge entfernt sind, die im Wesentlichen zwischen dem Ein- und Zehnfachen der Umfangsbreite einer Riefe (a) und zwischen dem Ein- und Fünffachen der Umfangsbreite einer Riefe (b) liegen.

5. Schnellanalyseverfahren nach einem der Ansprüche 1 bis 4, wobei am Ende des Schritts C das reduzierte Umfangsprofil des Bilds bestimmt wird, indem einer Einheit von Punkten, die sich auf der gleichen Umfangsabszisse befinden, und die zwischen zwei radialen Ordinatenwerten ($y_1,y_2$) liegt, ein repräsentativer Wert ($r(x)$) ihrer Erhöhungsvariation zugewiesen wird.

6. Schnellanalyseverfahren nach Anspruch 5, wobei das reduzierte Umfangsprofil bestimmt wird, indem die Summe oder der Mittelwert der absoluten Gradientenwerte gebildet wird, die jedem der Pixel zugewiesen sind, die die gleiche radiale Position

$$\left( r(x) = \sum_{y=y_1}^{y=y_2} f\big(p(x,y)\big) \right)$$

haben.

7. Schnellanalyseverfahren nach Anspruch 5, wobei das reduzierte Umfangsprofil ($r(x)$) bestimmt wird, indem die Anzahl von Pixeln gezählt wird, die sich auf der gleichen Umfangsabszisse befinden, die einen Wert ungleich Null hat.

8. Schnellanalyseverfahren nach einem der Ansprüche 5 bis 7, wobei das Signal ($r(x)$) demoduliert wird, das das reduzierte Umfangsprofil darstellt.

9. Schnellanalyseverfahren nach Anspruch 8, wobei das Signal demoduliert wird, indem ein Tiefpassfilter vom reduzierten Umfangsprofil ($r(x)$) subtrahiert wird, um nur die Elemente erscheinen zu lassen, deren Amplitude größer als die Schwelle ist.

10. Schnellanalyseverfahren nach Anspruch 8, wobei die Innenfläche Riefen enthält, und wobei das das reduzierte Umfangsprofil darstellende Signal demoduliert wird, indem die periodischen Elemente entfernt werden.

11. Schnellanalyseverfahren nach Anspruch 10, wobei vom reduzierten Umfangsprofil das Infimum des Profils mit seinem Versatz des Werts der Periode (s) des Umfangserscheinens der Riefen ($m(x)=r(x)-\wedge(r(x),r(x-s))$) subtrahiert wird.

**Claims**

1. Method of fast analysis of the relief elements featuring on the internal surface of a tyre, said method comprising steps during which:

A- the three-dimensional image of said surface is captured by assigning each pixel ($p(i,j)$) of the image a greyscale value ($g(p)$) proportional to the topographical elevation of this point, so as to obtain a starting image,

B- the image of the captured surface is transformed into an orthogonal reference frame (OXY) in which the abscissa axis (OX) represents the circumferential direction and the ordinate axis (OY) represents the radial direction,

C- each pixel ($p(x,y)$) of the surface is assigned an altitude gradient value ($f(p)$) by comparing its elevation with the elevation of a number of points, in addition to the point to which it is sought to assign said gradient value, between 1 and 4, arranged on a straight line passing through the pixel considered (p) and oriented in the circumferential direction,

the process being such that, during step C, the altitude gradient ($f(p_{x,y})=|g(x,y)-g(x+a,y)|$) is assessed using a single point distant from the pixel considered ($p(x,y)$) by a given value (a), and that, at the conclusion of step C, the image is transformed by assigning a gradient value of zero to the pixels of which the elevation gradient ($f(p)$) has an absolute value below a given threshold.

2. Method of fast analysis according to Claim 3, in which the inner surface includes striations, and in which the point is distant from the pixel considered by a length (a) corresponding substantially to the circumferential spacing between two striations.

3. Method of fast analysis according to Claim 2, in which, during step C, the altitude gradient ($f(p_{x,y})=|g(x,y)-g(x+b,y)|-|g(x+a,y)-g(x+a+b,y)|f(p_{x,y}) =\alpha(|g(x-a,y)-g(x-b,y)|+|g(x+a,y)-g(x+b,y))-\beta(|g(x,y)-g(x-b,y)| -|g(x,y)-g(x+b,y)|)))$) is assessed using four points positioned on each side of the pixel considered.

4. Method of fast analysis according to Claim 3, in which the inner surface includes striations, and in which the points upstream and downstream of the pixel considered are respectively distant from said pixel by a length substantially between one and ten times the circumferential width of a striation (a) and between one and five times the circumferential width of a striation (b).

5. Method of fast analysis according to one of Claims 1 to 4, in which, at the conclusion of step C the reduced circumferential profile is determined by assigning to a set of points located on the same circumferential abscissa, between two values of radial ordinates ($y_1, y_2$), a value ($r(x)$) representative of their variation of elevation.

6. Method of fast analysis according to Claim 5, in which the reduced circumferential profile is determined by obtaining the sum or the average of the absolute gradient values assigned to each of the pixels having the same radial position

$$(r(x) = \sum_{y=y_1}^{y=y_2} f(p(x,y)).$$

7. Method of fast analysis according to Claim 5 in which the reduced circumferential profile ($r(x)$) is determined by counting the number of pixels situated on the same circumferential abscissa having a non-zero value.

8. Method of fast analysis according to one of Claims 5 to 7, in which the signal ($r(x)$) representing the reduced circumferential profile is demodulated.

9. Method of fast analysis according to Claim 8, in which the signal is demodulated by subtracting a low-pass filter from said reduced circumferential profile *(r(x)),* so as to show only the elements for which the amplitude is above said threshold.

10. Method of fast analysis according to Claim 8, in which the inner surface includes striations, and in which the signal representing the reduced circumferential profile is demodulated by eliminating the periodic elements.

11. Method of fast analysis according to Claim 12 in which the infimum of said profile is subtracted from the reduced circumferential profile with its offset from the value of the period(s) of circumferential appearance of the striations ($m(x)=r(x)-\wedge(r(x),r(x-s))$).

Fig 1

Fig 2

Fig 3

Fig 4

EP 2 761 588 B1

Fig 5

Fig 6

Fig 7

Fig 8

## RÉFÉRENCES CITÉES DANS LA DESCRIPTION

**Documents brevets cités dans la description**

- FR 1154346
- EP 11053284 A
- DE 19849793
- WO 0248648 A